# EUROPEAN PATENT APPLICATION

(11) **EP 4 733 067 A1**
(43) Date of publication of application: **29.04.2026**
(21) Application number: 24826018.4
(22) Date of filing: 21.06.2024
(51) Int. Cl.: B32B 27/32, B65D 65/40

(54) **LAMINATE, SEALANT FILM, PACKAGING BAG, PACKAGE, AND WET HEAT TREATMENT PACKAGE**

(30) Priority: 22.06.2023 JP 2023102228
(71) Applicant: Toppan Holdings Inc., Tokyo 110-0016 (JP)
(72) Inventor: NAGAI, Aki, Tokyo 110-0016 (JP)
(74) Representative: Hoffmann Eitle
(86) International application number: PCT/JP2024/022625
(87) International publication number: WO 2024/262617

(57) **Abstract**

A laminate includes at least a substrate layer and a sealant layer. A seal surface of the sealant layer after the laminate is subjected to moist heat treatment has a surface softening temperature of 140°C or higher and 150°C or lower, as measured by local thermal analysis, and the substrate layer and the sealant layer contain a polypropylene-based resin. In the laminate, the seal surface of the sealant layer may have a surface softening temperature of 110°C or higher and 140°C or lower, as measured by local thermal analysis, and the sealant layer may have a fusion strength of 2.0 N/15 mm or lower when heat-sealed to an identical sealant layer under conditions of 121°C, 0.05 MPa, and 30 seconds.

## Description

### [Technical Field]

The present disclosure relates to a laminate, a sealant film, a packaging bag, a packaging body, and a moist heat-treated packaging body.

### [Background Art]

**In** recent years, there has been a growing need for environmentally friendly, sustainable packaging materials, and progress has been made in developing highly recyclable packaging materials (mono-material packaging materials) made of laminates of layers containing the same material.

Because mono-material packaging materials have inner and outer layers made of the same material, the outer layer has poorer heat resistance than packaging materials made of a laminate with inner and outer layers containing different resins (multi-material packaging materials). Therefore, in mono-material packaging materials, the outer layer is required to have higher heat resistance, while the inner layer is required to have a lower melting point, that is, to allow heat sealing at a low temperature.

As an example of such a mono-material packaging material, PTL 1 discloses a composite film having two layers, namely, a substrate layer and a heat-seal layer made of a propylene random copolymer and a high-density polyethylene, respectively.

### [Citation List]

### [Patent Literature]

[PTL 1] WO 2022/234761 A

### [Summary of the Invention]

### [Problem to be Solved by the Invention]

However, even though the composite film described in PTL 1 allows heat sealing at low temperatures (below 155°C), when a packaging bag obtained using the composite film is subjected to moist heat treatment such as retort treatment at a high temperature of, for example, about 120°C, it exhibits seal-surface fusion; in other words, the inner surfaces (seal surfaces (non-fused portions of the seal surfaces)) of the packaging bag fuse together. On the other hand, when the seal-surface fusion resistance is improved, low-temperature heat sealing sometimes fails.

The present disclosure has been made in consideration of the above circumstances, and an object thereof is to provide a laminate, a sealant film, a packaging bag, a packaging body, and a moist heat-treated packaging body that allow heat sealing at low temperatures but also have good seal-surface fusion resistance even after moist heat treatment.

### [Solution to Problem]

An aspect of the present disclosure provides a laminate including at least a substrate layer and a sealant layer, in which a seal surface of the sealant layer after the laminate is subjected to a moist heat treatment has a surface softening temperature of 140°C or higher and 150°C or lower, as measured by local thermal analysis, and the substrate layer and the sealant layer contain a polypropylene-based resin.

This laminate allows heat sealing at low temperatures but also has good seal-surface fusion resistance even after moist heat treatment. Specifically, when the surface softening temperature is 150°C or lower, the laminate can be heat-sealed at low temperatures. In addition, a surface softening temperature of 140°C or higher allows the laminate to have good seal-surface fusion resistance even after moist heat treatment. Therefore, even when the laminate is used to produce a packaging bag by heat-sealing the seal surfaces, and a packaging body, that is, a packaging bag with contents therein, is subjected to a moist heat treatment, it can sufficiently suppress fusion between the seal surfaces.

In the laminate, it is preferable that the seal surface of the sealant layer has a surface softening temperature of 110°C or higher and 140°C or lower, as measured by local thermal analysis, and the sealant layer has a fusion strength of 2.0 N/15 mm or lower when heat-sealed to an identical sealant layer under conditions of 121°C, 0.05 MPa, and 30 seconds.

This laminate allows heat sealing at low temperatures but also has better seal-surface fusion resistance even after moist heat treatment. Specifically, if the laminate is used to produce a packaging bag, when the seal surfaces of the laminate(s) are placed face-to-face and heat-sealed, the heat sealing can be performed at a lower temperature than in cases where the surface softening temperature of the seal surfaces, as determined by local thermal analysis, exceeds 140°C. In addition, even when the laminate is used to produce a packaging bag by heat-sealing the seal surfaces, and a packaging body, that is, a packaging bag with contents therein, is subjected to a moist heat treatment, the laminate can more adequately suppress fusion between the seal surfaces compared to when the fusion strength exceeds 2.0 N/15 mm.

The moist heat treatment may be pressure and heat treatment performed on the laminate under conditions of 0.33 MPa, 130°C, and 30 minutes.

Another aspect of the present disclosure provides a laminate including at least a substrate layer and a sealant layer, in which a seal surface of the sealant layer has a surface softening temperature of 110°C or higher and 140°C or lower, as measured by local thermal analysis, and the sealant layer has a fusion strength of 2.0 N/15 mm or lower when heat-sealed to an identical sealant layer under conditions of 121°C, 0.05 MPa, and 30 seconds, and the substrate layer and the sealant layer contain a polypropylene-based resin.

This laminate allows heat sealing at low temperatures but also has good seal-surface fusion resistance even after a moist heat treatment. Specifically, if the laminate is used to produce a packaging bag, when the seal surfaces of the laminate(s) are placed face-to-face and heat-sealed, the heat sealing can be performed at a lower temperature than in cases where the surface softening temperature of the seal surfaces, as determined by local thermal analysis, exceeds 140°C. In addition, even when the laminate is used to produce a packaging bag by heat-sealing the seal surfaces, and a packaging body, that is, a packaging bag with contents therein, is subjected to a moist heat treatment, the laminate can suppress fusion between the seal surfaces compared to when the fusion strength exceeds 2.0 N/15 mm.

In the above laminate, when the sealant layer is heat-sealed to an identical sealant layer under conditions of 0.05 MPa and 30 seconds, and the fusion strength when the heat sealing temperature is 121°C is denoted by T1 (N/15 mm), and the fusion strength when the heat sealing temperature is 128°C is denoted by T2 (N/15 mm), T2 - T1 is preferably 10.0 N/15 mm or less.

In that case, the laminate exhibits seal-surface fusion resistance even when subjected to moist heat treatment at 125°C or more. Therefore, even when the laminate is used to produce a packaging bag by heat-sealing the seal surfaces, and a packaging body, that is, a packaging bag with contents therein, is subjected to a moist heat treatment at 125°C or more, the laminate can suppress fusion between the seal surfaces.

In a total reflection infrared absorption spectrum of the seal surface, assuming that the absorption peak in a first region of 963 cm⁻¹ or more and 983 cm⁻¹ or less has a peak intensity of P1, a single absorption peak in a second region of 700 cm⁻¹ or more and 750 cm⁻¹ or less has a peak intensity of P2, and, when there are two or more absorption peaks in the second region, of the two absorption peaks with the greatest peak intensities in the second region, the one on the higher-wavenumber side has a peak intensity of P3 and the one on the lower-wavenumber side has a peak intensity of P4, it is preferable that a peak intensity ratio P2/P1 or P3/P1 is 0.15 or less, or P4/P3 is 1.5 or less.

This allows the laminate to exhibit better seal-surface fusion resistance even when subjected to a moist heat treatment. Therefore, even when the laminate is used to produce a packaging bag by heat-sealing the seal surfaces, and a packaging body, that is, a packaging bag with contents therein, is subjected to a moist heat treatment, the laminate can effectively suppress fusion between the seal surfaces.

The sealant layer preferably has a fusion strength of 10.0 N/15 mm or less when heat-sealed to an identical sealant layer under conditions of 135°C, 0.05 MPa, and 30 seconds.

In that case, the laminate exhibits seal-surface fusion resistance even when subjected to a moist heat treatment at 130°C or more. Therefore, even when the laminate is used to produce a packaging bag by heat-sealing the seal surfaces, and a packaging body, that is, a packaging bag with contents therein, is subjected to a moist heat treatment at 130°C or more, the laminate can suppress fusion between the seal surfaces.

The thickness of the sealant layer is preferably 20 µm or more and 100 µm or less.

When the thickness of the sealant layer is 100 µm or less, the amount of heat required for heat sealing can be easily reduced, and damage caused by heat to the substrate layer in the laminate can be easily reduced. When the thickness of the sealant layer is 20 µm or more, the sealabilty by heat sealing can be improved.

The laminate preferably further includes a gas barrier layer.

In this case, the gas barrier performance of the laminate can be further improved. Therefore, when the laminate is used to produce a packaging bag and the contents are placed therein to produce a packaging body, deterioration of the contents due to gases such as oxygen can be effectively suppressed.

Another aspect of the present disclosure provides a packaging bag obtained using the laminate, in which the seal surface is heat-sealed to another seal surface.

This packaging bag has low-temperature heat-sealability and can prevent fusion between the seal surfaces even when a moist heat treatment is performed.

The packaging bag may be used for an application requiring heat treatment at 80°C or higher.

Yet another aspect of the present disclosure provides a sealant film containing a polypropylene-based resin, in which, when a seal surface of the sealant film has a surface softening temperature of 110°C or higher and 140°C or lower, as measured by local thermal analysis, and the sealant film has a fusion strength of 2.0 N/15 mm or lower when heat-sealed to an identical sealant film under conditions of 121°C, 0.05 MPa, and 30 seconds.

Since this sealant film is heat-sealed at a low temperature, when a packaging bag is produced using a laminate including the sealant film and a substrate layer containing a polypropylene-based resin, the laminate can be heat-sealed at a low temperature by placing the seal surfaces of the laminate(s) face-to-face and heat-sealing them. Furthermore, when a laminate including this sealant film and a substrate layer containing a polypropylene-based resin is used to form a packaging bag by heat-sealing the seal surfaces so that the sealant film serves as the inner layer, fusion between the seal surfaces can be suppressed even when moist heat treatment is performed.

Yet another aspect of the present disclosure provides a packaging body including a packaging bag and contents contained in the packaging bag, in which the packaging bag is formed using the above-described laminate, and the seal surface forms an inner surface of the packaging bag.

According to this packaging body, it is possible to prevent the seal surfaces of the packaging bag from fusing together even when moist heat treatment is performed. This allows the packaging body to be easily opened. Once the packaging body is opened, the contents can be easily extracted and sufficiently discharged. As a result, the packaging bag remaining after the contents have been discharged can be highly recyclable. Furthermore, according to the above packaging body, since the laminate allows heat sealing at low temperatures, when the packaging bag is formed, thermal deterioration of layers other than the sealant layer in the laminate can be suppressed. This reduces deterioration in the quality of the contents of the packaging body.

Yet another aspect of the present disclosure provides a moist heat-treated packaging body obtained by subjecting the above packaging body to moist heat treatment. **In** other words, yet another aspect of the present disclosure provides a moist heat-treated packaging body including a packaging bag and contents contained in the packaging bag, in which the packaging bag is formed using a laminate including at least a substrate layer and a sealant layer, a seal surface of the sealant layer has a surface softening temperature of 140°C or higher and 150°C or lower, as measured by local thermal analysis, the substrate layer and the sealant layer contain a polypropylene-based resin, and the seal surface forms an inner surface of the packaging bag.

According to this moist heat-treated packaging body, since the laminate can prevent the seal surfaces of the packaging bag from fusing together due to the moist heat treatment, it is possible to prevent the seal surfaces of the packaging bags from fusing together after moist heat treatment. This allows the moist heat-treated packaging body to be easily opened. Once the moist heat-treated packaging body is opened, the contents can be easily extracted and sufficiently discharged. As a result, the packaging bag remaining after the contents have been discharged can be highly recyclable.

### [Advantageous Effects of the Invention]

According to the present disclosure a laminate, a sealant film, a packaging bag, a packaging body, and a moist heat-treated packaging body are provided that allow heat sealing at low temperatures but also have good seal-surface fusion resistance even after moist heat treatment.

### [Brief Description of the Drawings]

Fig. 1 is a schematic cross-sectional view illustrating an embodiment of a laminate according to the present disclosure.
Fig. 2 is a schematic cross-sectional view illustrating an embodiment of a packaging body according to the present disclosure.
Fig. 3 is a plan view showing a heat sealing sample used to measure the fusion strength of the sealant layer.
Fig. 4 is a schematic cross-sectional view illustrating an embodiment of a moist heat-treated packaging body according to the present disclosure.

### [Description of the Embodiments]

In the following, embodiments of the present disclosure will be explained. The same components are denoted by the same reference signs, and duplicated description is omitted. Further, the dimensional ratios in the drawings are not limited to those as illustrated.

### [Laminate]

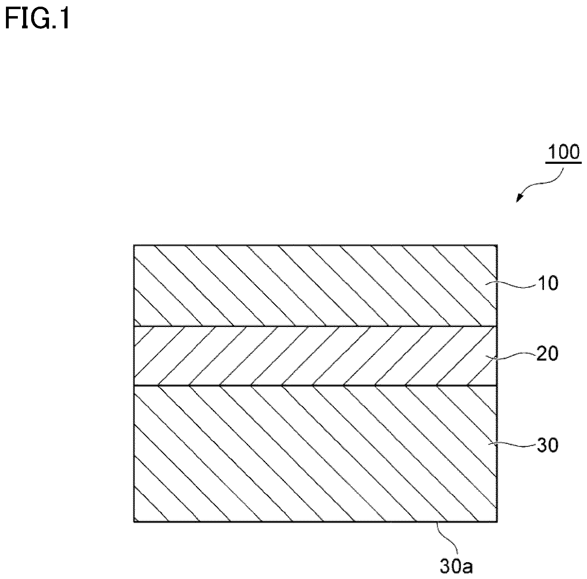

First, an embodiment of a laminate of the present disclosure will be described with reference to Fig. 1. Fig. 1 is a schematic cross-sectional view illustrating an embodiment of a laminate according to the present disclosure.

As shown in Fig. 1, a laminate 100 includes at least a substrate layer 10 and a sealant layer 30. The surface of the sealant layer 30 opposite to the substrate layer 10 is a seal surface 30a.

The substrate layer 10 and the sealant layer 30 contain a polypropylene-based resin.

The sealant layer 30 has a surface softening temperature of 110°C or higher and 140°C or lower, as determined by local thermal analysis of the seal surface 30a.

Furthermore, the sealant layer 30 has a fusion strength of 2.0 N/15 mm or less when heat-sealed to an identical sealant layer under conditions of 121°C, 0.05 MPa, and 30 seconds.

The laminate 100 may further include an intermediate layer 20 between the substrate layer 10 and the sealant layer 30. The laminate 100 may further include a printed layer as necessary.

The laminate 100 allows heat sealing at low temperatures but also has good seal-surface fusion resistance even after moist heat treatment. Specifically, if the laminate 100 is used to produce a packaging bag, when the seal surfaces 30a of the laminate(s) 100 are placed face-to-face and heat-sealed, the heat sealing can be performed at a lower temperature than in cases where the surface softening temperature of the seal surfaces 30a, as determined by local thermal analysis, exceeds 140°C. In addition, even when the laminate 100 is used to produce a packaging bag by heat-sealing the seal surfaces 30a, and a packaging body, that is, a packaging bag with contents therein, is subjected to a moist heat treatment, the laminate 100 can suppress fusion between the seal surfaces 30a compared to when the fusion strength exceeds 2.0 N/15 mm.

The laminate 100, the substrate layer 10, the sealant layer 30, the intermediate layer 20, and the printed layer will be described in detail below.

### (Laminate)

The content of the polypropylene-based resin in the laminate 100 is not particularly limited, but is preferably 72% by mass or more. This improves the recyclability of the laminate 100. From the perspective of further improving recyclability, the content of the polypropylene-based resin in the laminate 100 is more preferably 92% by mass or more, and even more preferably 95% by mass or more.

### (Substrate layer)

The substrate layer 10 supports the sealant layer 30 and contains the polypropylene-based resin.

The polypropylene-based resin contained in the substrate layer 10 includes a resin containing propylene as a structural unit. Examples of the polypropylene-based resin include homopolypropylene, propylene copolymers obtained by copolymerizing propylene with ethylene or an α-olefin such as butene, and ethylene-propylene rubber. These can be used singly or as a mixture of two or more.

Examples of propylene copolymers include propylene-ethylene random copolymers, propylene-ethylene block copolymers, and propylene-ethylene copolymers.

The polypropylene-based resin may be a block polypropylene that is a mixture of homopolypropylene and ethylene propylene rubber.

The substrate layer 10 may be either a non-stretched film or a stretched film. The stretched film may be either uniaxially or biaxially stretched. The substrate layer 10 may be a laminate including a stretched film and a non-stretched film.

The substrate layer 10 preferably includes a biaxially stretched film. This improves the mechanical strength and dimensional stability of the laminate 100.

The surface of the substrate layer 10 on the sealant layer 30 side may be subjected to various pretreatments such as corona treatment, plasma treatment, ozone treatment, and flame treatment, or may be provided with a coating layer such as an adhesion-enhancing layer.

The substrate layer 10 may contain a resin other than polypropylene-based resin. Examples of such resins include polyolefin-based resins such as polyethylene resins.

The substrate layer 10 may contain at least one additive selected from a filler, antistatic agent, plasticizer, lubricant, antioxidant, and the like as necessary.

### (Sealant layer)

The sealant layer 30 allows the laminate 100 to be heat-sealed and contains a polypropylene-based resin. The polypropylene-based resin contains a resin containing propylene as a structural unit. Examples of the polypropylene-based resin include homopolypropylene, propylene copolymers obtained by copolymerizing propylene with ethylene or an α-olefin such as butene, and ethylene-propylene rubber. These can be used singly or as a mixture of two or more.

Examples of propylene copolymers include propylene-ethylene random copolymers, propylene-ethylene block copolymers, and propylene-ethylene copolymers.

The polypropylene-based resin may be a block polypropylene that is a mixture of homopolypropylene and ethylene propylene rubber.

The sealant layer 30 may be a non-stretched film or a stretched film, but is preferably a non-stretched film from the perspective of lowering the heat sealing temperature and improving the sealability by heat sealing.

The sealant layer 30 may be include a single layer or a laminate of a plurality of layers.

For example, the thickness of the sealant layer 30 may be 20 µm or more, 60 µm or more, or 100 µm or more. When the thickness of the sealant layer 30 is 20 µm or more, the sealabilty by heat sealing can be improved.

The thickness of the sealant layer 30 may be 150 µm or less, 100 µm or less, or 60 µm or less, but it is preferably 100 µm or less. When the thickness of the sealant layer 30 is 100 µm or less, the amount of heat required for heat sealing can be easily reduced, and damage caused by heat to the substrate layer 10 and the intermediate layer 20 in the laminate 100 can be easily reduced.

### (1) Surface softening temperature of the seal surface

### (1-1) Surface softening temperature B

The surface softening temperature of the seal surface 30a, as determined by local thermal analysis, (hereinafter also referred to as "surface softening temperature B") is 110°C or higher and 140°C or lower, as described above. Herein, the surface softening temperature B is the surface softening temperature when the laminate 100 is not subjected to pressure or heat treatment. An advantage of having a surface softening temperature B or 110°C or higher is that the seal surface has better seal-surface fusion resistance after moist heat treatment, compared to when the surface softening temperature B is lower than 110°C. Furthermore, when the surface softening temperature B is 140°C or lower, heat sealing can be carried out at a lower temperature than when the surface softening temperature B exceeds 140°C.

The surface softening temperature B may be 115°C or higher, 120°C or higher, or 125°C or higher.

The surface softening temperature B may be 138°C or lower, 135°C or lower, 133°C or lower, or 130°C or lower.

For example, when the polypropylene-based resin used for the sealant layer 30 contains homopolypropylene or block polypropylene, a sealant layer 30 having a high surface softening temperature B can be obtained. On the other hand, when the polypropylene-based resin contains random polypropylene or elastomer, a sealant layer 30 having a low surface softening temperature B can be obtained. Therefore, the surface softening temperature B of the sealant layer 30 can be adjusted to a desired value by appropriately adjusting the type and mixing ratio of the polypropylene-based resins.

The surface softening temperature is the temperature at which a substance, such as a resin, exhibits softening behavior. In this embodiment, the surface softening temperature B is measured by performing local thermal analysis (LTA) on the seal surface 30a of the sealant layer 30 using an atomic force microscope (AFM).

Specifically, the surface softening temperature B is calculated as follows.

First, the sealant layer 30 is prepared. The sealant layer 30 itself may be prepared, or a laminate obtained by bonding another film, such as the substrate layer 10, to the sealant layer 30 may be prepared.

To measure the surface softening temperature B, the sealant layer 30 is heated by applying a voltage to a cantilever having a heater. In the local thermal analysis (LTA), the shape of the surface (seal surface 30a) of the sealant layer 30 is measured, and then a constant force (contact pressure) is applied to a predetermined location on the surface of the sealant layer 30 with the cantilever. Heating is performed while maintaining constant contact pressure, and the temperature at which the height position (Z displacement) of the cantilever changes due to a change in hardness of the seal surface 30a before and after heating is calculated as the surface softening temperature. The phrase "change in the height position of the cantilever" refers to an upward displacement of the cantilever in the vertical direction due to thermal expansion of the seal surface 30a, or a downward displacement in its position in the vertical direction due to softening of the seal surface 30a. By converting the voltage applied to the cantilever heater when such a change in the height position of the cantilever occurs into the surface softening temperature, it is possible to locally determine the softening temperature in the nanoscale region and near the surface.

A calibration curve of applied voltage and temperature is created to convert the voltage applied to the cantilever heater into a softening temperature. Four types of polymeric materials with different melting points differing from each other by 50° C or more are used as calibration samples. The polymer materials used include materials having a melting point higher than or equal to the surface softening temperature of the sealant layer 30 and materials having a melting point lower than or equal to the surface softening temperature. The melting point (melting peak temperature) of each calibration sample is measured in advance using a differential scanning calorimeter (DSC), and the melting point is taken as the surface softening temperature of the calibration sample. Local thermal analysis is performed on each calibration sample at different measurement positions, and the calibration curve is created by approximating, with a cubic function using the least squares method, the relationship between the average value of the applied voltages obtained at the softening points and the softening temperature of the calibration sample (melting point measured by DSC).

Using this calibration curve of the relationship between applied voltage and temperature, the temperature corresponding to the applied voltage at the softening point is determined, and this temperature is taken as the surface softening temperature. The surface softening temperature is thus calculated.

Note that the surface softening temperature B of the seal surface 30a of the sealant layer 30 does not need to be 110°C or higher and 140°C or lower. Furthermore, the sealant layer 30 does not need to have a fusion strength of 2.0 N/15 mm or less when heat-sealed to an identical sealant layer under conditions of 121°C, 0.05 MPa, and 30 seconds.

### (1-2) Surface softening temperature A

In the sealant layer 30, the surface softening temperature (hereinafter also referred to as "surface softening temperature A") of the seal surface 30a, determined by local thermal analysis after the laminate 100 is subjected to pressure and heat treatment, is 140°C or higher and 150°C or lower.

When the surface softening temperature A is 150°C or lower, the laminate 100 can be heat-sealed at low temperatures. In addition, a surface softening temperature A of 140°C or higher allows the laminate 100 to have better seal-surface fusion resistance even after moist heat treatment. Therefore, even when the laminate 100 is used to produce a packaging bag by heat-sealing the seal surfaces 30a, and a packaging body, that is, a packaging bag with contents therein, is subjected to a moist heat treatment, the laminate 100 can sufficiently suppress fusion between the seal surfaces 30a.

The surface softening temperature A may be 143°C or higher, 145°C or higher, or 146°C or higher.

Furthermore, the surface softening temperature A may be 149°C or lower, or 148°C or lower.

The surface softening temperature A can be measured in the same manner as the surface softening temperature B.

The above-described pressure and heat treatment is a process for simulating the effect of heat in moist heat treatment on the sealant layer 30, and is carried out under conditions of, for example, 0.33 MPa, 130°C, and 30 minutes.

### (2) Fusion strength

The sealant layer 30 has a fusion strength T1 of 2.0 N/15 mm or less when heat-sealed to an identical sealant layer under conditions of 121°C, 0.05 MPa, and 30 seconds. By having a fusion strength T1 of 2.0 N/15 mm or less, even when the laminate 100 is used to produce a packaging bag by heat-sealing the seal surfaces 30a of the sealant layers 30, and a packaging body, that is, a packaging bag with contents therein, is subjected to a moist heat treatment, the laminate 100 can suppress fusion between the seal surfaces 30a.

The fusion strength T1 may be 1.8 N/15 mm or less, or 1.6 N/15 mm or less.

The fusion strength T1 may be 0 N/15 mm or more. The fusion strength may be 0.1 N/15 mm or more, 0.3 N/15 mm or more, or 0.5 N/15 mm or more.

The term "identical sealant layer" refers to a sealant layer having the same constituent materials and thickness as the sealant layer 30.

When the fusion strength between the sealant layer 30 and an identical sealant layer heat-sealed under conditions of 128°C, 0.05 MPa, and 30 seconds is denoted by T2 (N/15 mm), T2 - T1 is not particularly limited, but is preferably 10.0 N/15 mm or less, more preferably 8 N/15 mm or less, and particularly preferably 6 N/15 mm or less. When T2 - T1 is 10.0 N/15 mm or less, the laminate 100 exhibits seal-surface fusion resistance even when subjected to a moist heat treatment at 125°C or more. Therefore, even when the laminate 100 is used to produce a packaging bag by heat-sealing the seal surfaces 30a, and a packaging body, that is, a packaging bag with contents therein, is subjected to a moist heat treatment at 125°C or more, the laminate 100 can suppress fusion between the seal surfaces 30a.

The value of T2 - T1 may be 0 N/15 mm or greater. When the value of T2 - T1 is greater than 0 N/15 mm, it may be 0.1 N/15 mm or greater, 0.5 N/15 mm or greater, or 1.0 N/15 mm or greater.

The sealant layer 30 preferably has a fusion strength T3 of 10.0 N/15 mm or less when heat-sealed to an identical sealant layer under conditions of 135°C, 0.05 MPa, and 30 seconds.

In that case, the laminate 100 exhibits seal-surface fusion resistance even when subjected to a moist heat treatment at 130°C or more. Therefore, even when the laminate 100 is used to produce a packaging bag by heat-sealing the seal surfaces 30a, and a packaging body, that is, a packaging bag with contents therein, is subjected to a moist heat treatment at 130°C or more, the laminate 100 can suppress fusion between the seal surfaces 30a.

The fusion strength T3 may be 8.0 N/15 mm or less, or 5.0 N/15 mm or less.

The fusion strength T3 may be 1.0 N/15 mm or more, or 2.0 N/15 mm or more.

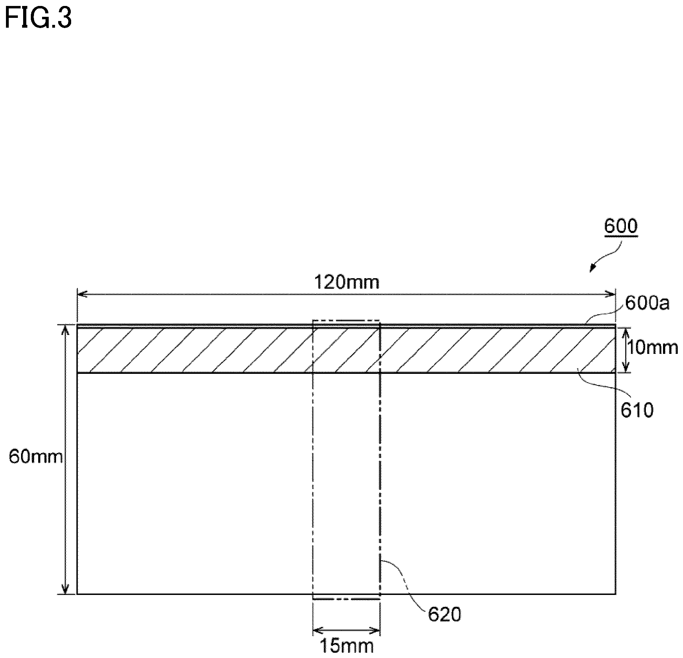

The fusion strength is measured by the T-peel test. The method of measuring the fusion strength will be described below with reference to Fig. 3. Fig. 3 is a plan view showing a heat sealing sample used to measure the fusion strength of the sealant layer.

First, two films each made of the sealant layer are prepared to be used for the measurement. As shown in Fig. 3, each film is prepared so that the length in the machine direction (MD direction) during film formation is 60 mm and the length in the direction perpendicular to the MD direction (TD direction) during film formation is 120 mm. Then, the two films are stacked, and a 10-mm-wide area along an edge portion 600a in the TD direction is heat-sealed by applying a pressure of 0.05 MPa for 30 seconds at a predetermined heat-sealing temperature (121°C, 128°C, or 135°C), thereby forming a heat-sealed portion 610 indicated by diagonal lines. A heat sealing sample 600 is thus obtained. The heat-sealed portion 610 measures 10 mm in the MD direction and 120 mm in the TD direction.

Next, a portion 620 indicated by a broken line (two-dot chain line) in Fig. 3 is cut out from the heat sealing sample 600 to obtain a specimen having a width of 15 mm in the TD direction and a length of 60 mm in the MD direction.

Finally, the T-peel test is carried out using the specimens. The T-peel test is carried out according to JIS K 6854-3. The tensile strength at separation of the heat-sealed portion of a specimen is taken as the fusion strength of the heat-sealed portion under the heat-sealing conditions. The fusion strength is measured in this manner.

### (3) Peak intensity ratio in total reflection infrared absorption spectrum

When the total reflection infrared absorption spectrum of the seal surface 30a is measured, since the sealant layer 30 contains a polypropylene-based resin (e.g., a random polypropylene copolymer), one absorption peak corresponding to the methyl group of the polypropylene-based resin appears in a first region of 963 cm⁻¹ or more and 983 cm⁻¹ or less.

In cases where the polypropylene-based resin contained in the sealant layer 30 contains a methylene group, an absorption peak corresponding to the methylene group appears in a second region of 700 cm⁻¹ or more and 750 cm⁻¹ or less. When the content of the polyethylene-based resin in the sealant layer 30 increases or when the polypropylene-based resin is, for example, a block polypropylene, the absorption peak splits into two due to a change in crystallinity.

Assuming that the absorption peak in the first region has a peak intensity of P1, the absorption peak in the second region has a peak intensity of P2 when there is one absorption peak therein, and, when there are two or more absorption peaks in the second region, of the two greatest absorption peaks, the one on the higher-wavenumber side has a peak intensity of P3 and the one on the lower-wavenumber side has a peak intensity of P4, it is preferable that the peak intensity ratio P2/P1 is 0.15 or less or P3/P1 is 0.15 or less, or P4/P3 is 1.5 or less.

This allows the laminate 100 to exhibit better seal-surface fusion resistance even when subjected to moist heat treatment. Therefore, even when the laminate 100 is used to produce a packaging bag by heat-sealing the seal surfaces 30a, and a packaging body, that is, the packaging bag with contents therein, is subjected to a moist heat treatment, the laminate 100 can effectively suppress fusion between the seal surfaces 30a.

The ratio P2/P1 or P3/P1 is more preferably 0.13 or less. This makes it possible to suppress fusion between the seal surfaces 30a more effectively even when a moist heat treatment is performed at a high temperature, compared to when P2/P1 or P3/P1 exceeds 0.13.

The ratio P2/P1 or P3/P1 may be 0.04 or more, or may be 0.06 or more.

The ratio P4/P3 is preferably 1.2 or less.

The ratio P4/P3 may be 0.5 or more, or 1.0 or more.

The total reflection infrared absorption spectrum is an infrared absorption spectrum obtained by irradiating the seal surface 30a of the sealant layer 30 with infrared light through a prism and measuring the light which undergoes total reflection at the interface between the sealant layer 30 and the prism.

The peak intensity of each absorption peak refers to the difference between the intensity at the maximum of the absorption peak and the intensity at the baseline in the total reflection infrared absorption spectrum measured as described above.

When the sealant layer 30 has a high homopolypropylene content, or when it contains a propylene copolymer having a high propylene content, the proportion of methyl groups in the sealant layer 30 increases, and therefore the value of P1 tends to increase.

On the other hand, when the sealant layer 30 has a high content of a material that contains methylene groups and has a low degree of crystallinity, such as polyethylene or random polypropylene containing ethylene as a structural unit, the absorption peak of the second region is less likely to split. In such a case, the value of P2 tends to increase as the proportion of ethylene in the polyethylene or propylene copolymer in the sealant layer 30 increases.

When the sealant layer 30 has a high content of a material that contains methylene groups and has a high degree of crystallinity, such as block polypropylene, the absorption peak of the second region is likely to split. In such a case, the greater the proportion of block polypropylene in the sealant layer 30, the greater the values of P3 and P4, and the greater the value of P4 in particular.

Therefore, by appropriately adjusting the type of polypropylene-based resin or the mixing proportion of polyethylene-based resin in the sealant layer 30, the peak intensity ratios P1/P2, P3/P2, and P3/P4 can be adjusted to the desired values.

### (Intermediate layer)

For example, the intermediate layer 20 may be a gas barrier film. When the laminate 100 has a gas barrier film as the intermediate layer 20, and the laminate 100 is used to produce a packaging bag and the contents are placed therein to produce a packaging body, deterioration of the contents due to gases such as oxygen can be effectively suppressed.

The gas barrier film includes a gas barrier layer.

The gas barrier layer may include a vapor-deposited layer made of an inorganic compound.

Examples of the inorganic compound forming the vapor-deposited layer include SiO_{X} and AlO_{X}.

When SiO_{X} is used for the gas barrier layer, for example, the gas barrier layer is transparent, which allows the contents to be seen from the outside of the packaging bag.

The vapor-deposited layer can be formed by vacuum vapor deposition of an inorganic compound such as SiO_{X} or AlO_{X}. The thickness of the vapor-deposited layer may be, for example, 15 to 30 nm.

The gas barrier film suffices if it includes a gas barrier layer, and may include only a gas barrier layer, or may include a resin film (plastic film), an anchor coat layer, and a gas barrier layer in this order.

The gas barrier layer may be provided on either the substrate layer 10 side or the sealant layer 30 side of the resin film.

The gas barrier layer has gas barrier properties even when it includes only the vapor-deposited layer, but preferably includes a composite layer formed by laminating a coating layer on top of the vapor-deposited layer.

When the gas barrier layer includes a composite layer, in the gas barrier layer, either a reaction layer is formed at the interface between the vapor-deposited layer and the coating layer, or a dense structure is formed by the coating layer filling or reinforcing defects or micropores such as pinholes, cracks, and grain boundaries in the vapor-deposited layer. Therefore, a gas barrier layer including a composite layer that combines a coating layer and a vapor-deposited layer achieves higher gas barrier performance, moisture resistance, and water resistance, and is flexible enough to withstand deformation due to external forces, making the laminate 100 suitable for use as a packaging material.

The coating layer can be formed by applying a coating agent onto the vapor-deposited layer and then drying it by heating. The coating agent may be based on an aqueous solution or a water-alcohol mixed aqueous solution containing a water-soluble polymer and at least one of one or more alkoxides, hydrolysates thereof, and tin chloride. The coating agent may further contain a silane monomer. This improves the adhesion between the coating layer and the vapor-deposited layer.

The anchor coat layer can be formed using a curable compound (resin) such as urethane acrylate. The anchor coat layer can be formed by applying a paint containing a curable compound dissolved in a solvent, through the application of a printing technique such as gravure coating or using a commonly known coating method.

The resin film suffices if it contains a resin. The resin is not particularly limited, but is preferably a polypropylene-based resin. When the resin of the resin film is a polypropylene-based resin, the laminate 100 has an even higher recyclability.

The resin film may be an unstretched film or a stretched film, but is preferably a stretched film for better heat resistance and dimensional stability.

The stretched film may be either uniaxially or biaxially stretched. When the stretched film is a biaxially stretched film, the strength and transparency of the laminate 100 are further improved.

The thickness of the resin film may be determined as appropriate depending on the intended use of the laminate 100, and may be 10 µm or more, or 15 µm or more.

The thickness of the resin film may be 40 µm or less, or 25 µm or less.

The intermediate layer 20 may be an adhesive layer instead of a gas barrier layer, or may further include an adhesive layer.

### (Printed layer)

As mentioned earlier, the laminate 100 may include a printed layer.

The printed layer can be provided on at least one surface of the substrate layer 10 or on at least one surface of the intermediate layer 20.

The printed layer is provided at a location visible from the outside of the laminate 100 for the purpose of displaying information about the contents, allowing identification of the contents, improving concealability, or improving the designability of the packaging bag.

The printing ink for forming the printed layer is not particularly limited, and is appropriately selected from known printing inks taking into consideration the printability on other layers in the laminate 100, aesthetic properties such as color tone, adhesion, and safety for use in food container.

The printing method is also not particularly limited, and may be appropriately selected from known printing methods. Examples of the printing method that can be used include gravure printing, offset printing, gravure offset printing, flexographic printing, and inkjet printing. Among these, gravure printing is preferably used because of its high productivity and high image definition.

### [Sealant Film]

Next, a sealant film of the present disclosure will be described.

The sealant film of the present disclosure is constituted by the sealant layer 30 described above. In other words, the sealant film contains a polypropylene-based resin, has a seal surface 30a with a surface softening temperature of 110°C or higher and 140°C or lower, as measured by local thermal analysis, and has a fusion strength of 2.0 N/15 mm or lower when heat-sealed under conditions of 121°C, 0.05 MPa, and 30 seconds.

Since this sealant film is heat-sealed at a low temperature, when a packaging bag is produced using a laminate including the sealant film and a substrate layer containing a polypropylene-based resin, the laminate can be heat-sealed at a low temperature by placing the seal surfaces of the laminate(s) face-to-face and heat-sealing them. Furthermore, when a laminate including this sealant film and a substrate layer containing a polypropylene-based resin is used to form a packaging bag by heat-sealing the seal surfaces so that the sealant film serves as the inner layer, fusion between the seal surfaces 30a can be suppressed even when moist heat treatment is performed.

In the sealant film, the surface softening temperature A of the seal surface 30a of the sealant layer 30 may or may not be 140°C or higher and 150°C or lower.

### [Packaging Body]

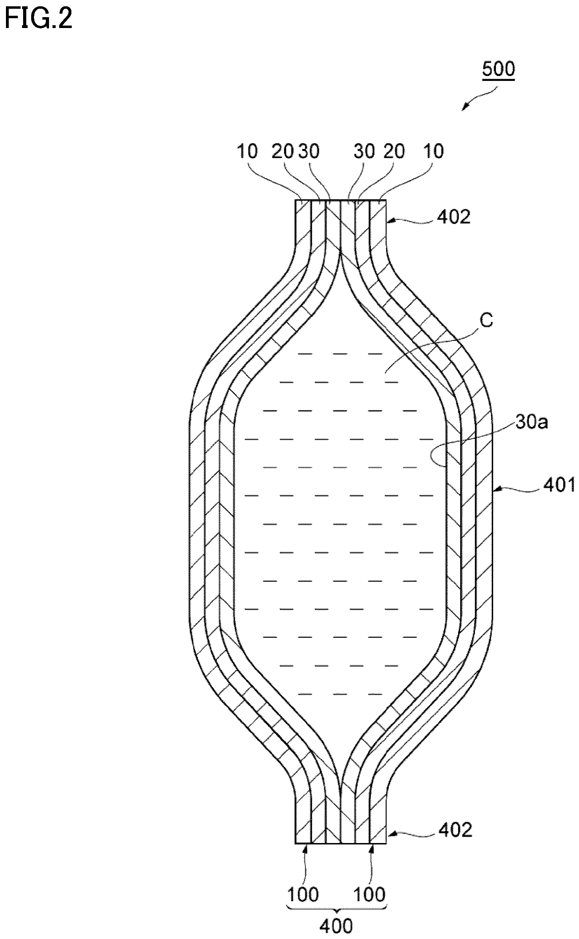

An embodiment of a packaging body of the present disclosure will be described with reference to Fig. 2. Fig. 2 is a schematic cross-sectional view illustrating an embodiment of a packaging body according to the present disclosure.

As shown in Fig. 2, a packaging body 500 includes a packaging bag 400 and contents C contained in the packaging bag 400. The packaging bag 400 is formed using the laminate 100, and the seal surface 30a forms the inner surface of the packaging bag 400. Specifically, the packaging bag 400 is formed by stacking two laminates 100 with their seal surfaces 30a facing each other, and heat-sealing the peripheral edges of the seal surfaces 30a. Therefore, the packaging bag 400 includes a main body portion 401 in which the contents C are contained, and a sealed portion 402 surrounding the main body portion 401.

The packaging body 500 can prevent the seal surfaces 30a of the packaging bag from fusing together due to moist heat treatment. Therefore, when opening the packaging body 500 by pulling apart the opposing seal surfaces 30a of the packaging bag 400, the packaging body 500 can be easily opened. In addition, when part of the sealed portion 402 is cut out to form an opening to open the packaging body 500, the contents C can be easily extracted and sufficiently discharged through the opening. As a result, the packaging bag 400 remaining after the contents C have been discharged can be highly recyclable.

Furthermore, according to the packaging body 500, since the laminate 100 allows heat sealing at low temperatures, when the packaging bag 400 is formed, thermal deterioration of layers other than the sealant layer 30 in the laminate 100 (the substrate layer 10 or the intermediate layer 20) can be suppressed. This reduces deterioration in the quality of the contents C of the packaging body 500.

### (Contents)

The contents C are not particularly limited, but examples of the contents C include food and medicine. When the contents C are food, the packaging body 500 allows the contents C to be easily extracted and sufficiently discharged after the packaging body 500 is opened. Therefore, the packaging body 500 can also reduce food waste.

### (Packaging bag)

In the present embodiment, the packaging bag 400 includes the main body portion 401 in which the contents C are contained, and the sealed portion 402 surrounding the main body portion 401. In other words, the packaging bag 400 is a four-sided pouch.

The two laminates 100 constituting the packaging bag 400 may be made of different materials and may have different thicknesses, shapes, and the like.

The packaging bag 400 is not particularly limited to a four-sided pouch, and its type can be appropriately selected according to the intended use. The packaging bag 400 may be, for example, a three-sided pouch, a pillow bag, a standing pouch, a gusset bag, or a bag with a spout.

The packaging bag 400 may be constituted by three or more laminates 100. The plurality of laminates 100 constituting the packaging bag 400 may be made of different materials and may have different thicknesses, shapes, and the like.

The packaging bag 400 may be used for applications requiring heat treatment at 80°C or higher. Examples of such heat treatments include moist heat treatments such as retort treatment and boiling treatment.

### [Moist Heat-treated Packaging Body]

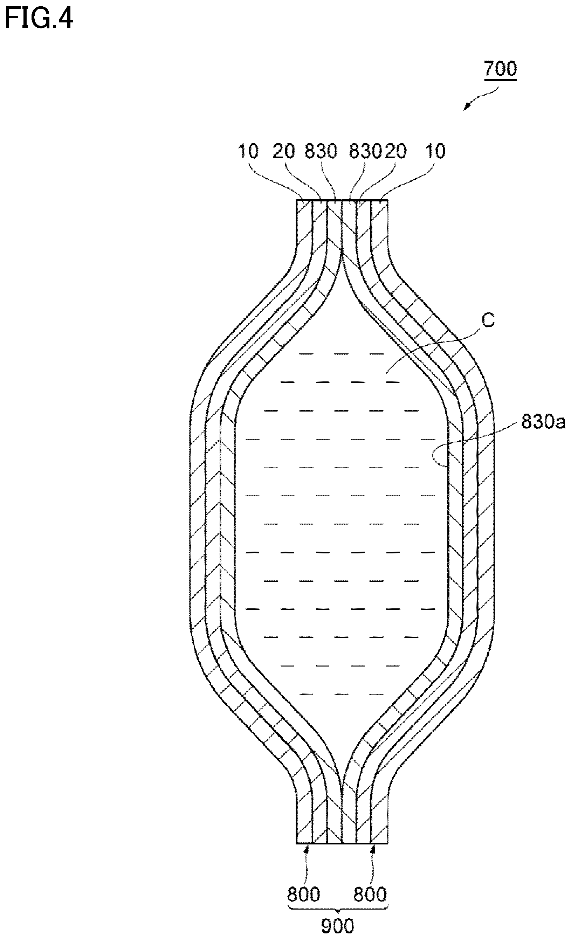

An embodiment of a moist heat-treated packaging body of the present disclosure will be described with reference to Fig. 4. Fig. 4 is a schematic cross-sectional view illustrating an embodiment of a moist heat-treated packaging body according to the present disclosure.

As shown in Fig. 4, a moist heat-treated packaging body 700 includes a packaging bag 900 and contents C contained in the packaging bag 900. That is, the moist heat-treated packaging body 700 is obtained by subjecting the packaging body 500 to moist heat treatment. The packaging bag 900 is formed using a laminate 800, and a seal surface 830a forms the inner surface of the packaging bag 900. Here, the laminate 800 is obtained by subjecting the laminate 100 to a moist heat treatment, and the seal surface 830a is the seal surface 30a of the sealant layer 30 after the moist heat treatment. Specifically, the packaging bag 900 is formed by stacking two laminates 800 with their seal surfaces 830a facing each other, heat-sealing the peripheral edges of the seal surfaces 830a, and then performing moist heat treatment.

Examples of the moist heat treatment include pressure and heat treatments such as retort treatment and boiling treatment. The retort treatment is a pressure and heat treatment performed under conditions of, for example, 0.33 MPa, 130°C, and 30 minutes, and the boiling treatment is a heat treatment performed under conditions of, for example, 80°C and 45 minutes.

Each laminate 800 includes the substrate layer 10 and the sealant layer 830. The surface softening temperature of the seal surface 830a of the sealant layer 830 is 140°C or higher and 150°C or lower, as measured by local thermal analysis, the sealant layer 830 contains a polypropylene-based resin, and the seal surface 830a forms the inner surface of the packaging bag 900. The seal surface 830a is the surface of the sealant layer 830 opposite to the substrate layer 10.

According to this moist heat-treated packaging body 700, since the laminate 800 can prevent the seal surfaces 830a of the packaging bag 900 from fusing together due to the moist heat treatment, it is possible to prevent the seal surfaces 830a of the packaging bags 900 from fusing together after retort treatment. This allows the moist heat-treated packaging body 700 to be easily opened. Once the moist heat-treated packaging body 700 is opened, the contents C can be easily extracted and sufficiently discharged. As a result, the packaging bag 900 remaining after the contents C have been discharged can be highly recyclable.

The surface softening temperature may be 143°C or higher, 145°C or higher, or 146°C or higher.

Furthermore, the surface softening temperature may be 149°C or lower, or 148°C or lower.

The surface softening temperature can be measured in the same manner as the surface softening temperature A.

The two laminates 800 constituting the packaging bag 900 may be made of different materials and may have different thicknesses, shapes, and the like.

The packaging bag 900 is not particularly limited to a four-sided pouch, and its type can be appropriately selected according to the intended use. The packaging bag 900 may be, for example, a three-sided pouch, a pillow bag, a standing pouch, a gusset bag, or a bag with a spout.

The packaging bag 900 may be constituted by three or more laminates 800. The plurality of laminates 800 constituting the packaging bag 900 may be made of different materials and may have different thicknesses, shapes, and the like.

### Examples

In the following, specific examples of the present disclosure will be described. Note that the embodiments of the present disclosure are not limited to the following examples.

### (Example 1)

First, a biaxially stretched polypropylene resin film (OPP2) (manufactured by Futamura Chemical Co., Ltd. under the trade name of "FOR") with a thickness of 20 µm was prepared as the resin film.

Then, a vapor-deposited film was formed on one surface of the resin film using a vacuum vapor deposition device. A gas barrier film was thus obtained.

Next, a polyurethane-based adhesive was applied to the surface of the gas barrier film on the vapor-deposited layer side, and the gas barrier film was bonded, using this adhesive, to a 20-µm thick biaxially stretched polypropylene film (OPP1) (manufactured by Futamura Chemical Co., Ltd. under the trade name of "FOR") as the substrate layer. The adhesive, "Takelac A626/Takenate A50", manufactured by Mitsui Chemicals, Inc., was used as the polyurethane-based adhesive.

Next, the polyurethane-based adhesive was applied to the surface of the gas barrier film opposite the vapor-deposited layer, and the gas barrier film was bonded, through this adhesive, to a 60-µm thick unstretched polypropylene film (CPP film) as the sealant layer. A laminate (substrate layer/vapor-deposited layer/resin film/sealant layer) was thus produced.

The surface softening temperatures B (before pressure and heat treatment) and A (after pressure and heat treatment) of the seal surface, fusion strengths T1, T2, and T3 at 121°C, 128°C, and 135°C, respectively, T2 - T1, and total reflection infrared absorption spectrum of the sealant layer were calculated or measured as described below. Table 1 shows the obtained surface softening temperatures B and A, fusion strengths T1, T2, and T3, T2 - T1, and peak intensity ratios P2/P1, P3/P1, and P4/P3.

### (Examples 2 to 9 and Comparative Examples 2 to 3)

A laminate was prepared in the same manner as in Example 1, except that CPP films having thickness, surface softening temperatures B and A, fusion strengths T1, T2, and T3, T2 - T1, and peak intensity ratios P2/P1, P3/P1, and P4/P3 shown in Table 1 were used as the sealant layer.

### (Comparative Example 1)

A laminate was prepared in the same manner as in Example 1, except that a CPP film (trade name "TORAYFAN (registered trademark) NO ZK207", manufactured by Toray Advanced Film Co., Ltd.) having the thickness, surface softening temperatures B and A, fusion strengths T1, T2, and T3, T2 - T1, and peak intensity ratios P2/P1, P3/P1, and P4/P3 shown in Table 1 was used as the sealant layer.

### (1) Surface softening temperature

The surface softening temperatures B and A of the seal surface of the sealant layer were calculated as follows.

### (1-1) Surface softening temperature B

First, a surface softening temperature measurement device was prepared that includes a MFP-3D-SA (trade name), manufactured by Oxford Instruments, as an atomic force microscope (AFM), a Ztherm system (trade name) as a local thermal analysis option, and an AN2-200 (trade name), manufactured by Anasys Instruments, as a cantilever with a spring constant of 0.5 to 3.5 N/m.

A sealant film was prepared as a sealant layer to be used in the production of a laminate.

Then, the surface softening temperature measurement device was used to measure the surface softening temperatures and the shape of the seal surface of the sealant film. The measurement mode was the AC mode (tapping mode) for measuring the shape of the seal surface, and the contact mode for measuring the surface softening temperatures. The surface softening temperatures were measured in a 10 µm × 10 µm area including the center of the seal surface (the intersection of its diagonals).

When setting the contact pressure of the cantilever (change in the deflection of the cantilever), the deflection voltage change was set to 0.2 V, the voltage application rate (temperature increase rate) was set to 0.5 V/sec, and the maximum applied voltage was set to 5.5 V. The seal surface was heated after detrend correction. The seal surface expanded and the cantilever position rose, after which the seal surface was further heated to soften it, and the measurement was terminated when the cantilever position decreased by 10 nm. If the vertical height (Z displacement) of the cantilever reached the maximum applied voltage without decreasing by 50 nm from the change point, the maximum applied voltage during detrend correction and measurement was increased by 0.5 V, and the measurement was performed again.

The applied voltage at the point where the vertical height (Z displacement) of the cantilever was greatest was taken as the applied voltage at the softening point, and its voltage value was read.

In order to calculate the surface softening temperatures of the sealant layer, a calibration curve was created tailored to the measurement conditions of the sealant layer. The following four polymer materials were used as calibration samples. Their melting points (melting peak temperatures) were measured in advance using a differential scanning calorimeter (DSC), and the samples were prepared in an environment below the glass transition temperature.
- Polycaprolactone pellets (melting point: 60°C)
- Low-density polyethylene pellets (melting point: 112°C)
- Polypropylene pellets (melting point: 166°C)
- Biaxially stretched polyethylene terephthalate film (melting point: 255°C)

The measurement conditions were as follows. The voltage application rate (temperature increase rate) was 0.5 V/sec, and the maximum applied voltage was 3.5 V for polycaprolactone, 5 V for low-density polyethylene, 6 V for polypropylene, and 7.8 V for polyethylene terephthalate. When setting the contact pressure of the cantilever (change in the deflection of the cantilever), the deflection voltage change was set to 0.2 V. After detrend correction, the seal surface was heated, and the applied voltage at the softening point was measured. The applied voltage at the softening point was measured 10 times at different positions on each calibration sample, and a calibration curve was created by approximating, with a cubic function using the least squares method, the relationship between the average value of the applied voltages obtained at the softening points and the melting point measured by DSC (melting peak temperature).

Using this calibration curve of the relationship between applied voltage and temperature, the temperature corresponding to the applied voltage at the softening point of the seal surface was determined, and this temperature was taken as the surface softening temperature B. The results are shown in Table 1.

### (1-2) Surface softening temperature A

First, two sealant films each measuring 120 mm (MD direction) × 120 mm (TD direction) were prepared from a CPP film as the sealant layer used in the examples and comparative examples.

The two sealant films were placed so that their seal surfaces face each other, and three sides were heat-sealed to produce a packaging bag with an opening.

After pouring 150 mL of water into the packaging bag through the opening, the opening was heat-sealed and closed, thereby producing a packaging body.

Then, the prepared packaging body was heated by spraying water at 130°C for 30 minutes in an environment of 0.33 MPa, and then cooled by spraying water at 40°C for 10 minutes in an environment of 0.33 MPa.

Finally, a sealed portion of the packaging body was cut off, the water was discharged, and the seal surfaces were dried.

A sealant film that had been subjected to heat and pressure treatment was thus prepared.

Then, the surface softening temperature A of the sealant film after this heat and pressure treatment was calculated in the same manner as the surface softening temperature B. The results are shown in Table 1.

### (2) Fusion strength

The fusion strength was measured by the T-peel test.

Specifically, first, two films each made of the sealant layer were prepared to be used for the measurement. Each film measured 60 mm (MD direction) × 120 mm (TD direction). Then, the two films were stacked, and a 10-mm-wide area along an edge portion 600a in the TD direction was heat-sealed by applying a pressure of 0.05 MPa for 30 seconds at a predetermined heat-sealing temperature (121°C, 128°C, or 135°C), thereby forming a heat-sealed portion measuring 10 mm (MD direction) × 120 mm (TD direction), indicated by diagonal lines in Fig. 3. A heat sealing sample was thus obtained.

Next, the portion 620 indicated by a broken line in Fig. 3 was cut out from the heat sealing sample to obtain a specimen measuring 15 mm (TD direction) × 60 mm (MD direction).

Finally, the T-peel test was carried out using the specimens. The T-peel test was carried out according to JIS K 6854-3 and under the following test conditions. The tensile strength at separation of the heat-sealed portion of a specimen was taken as the fusion strength of the heat-sealed portion under the heat-sealing conditions. The fusion strength was measured in this manner. The results are shown in Table 1.

### (Test conditions)

- Initial grip separation: 15 mm
- Tensile rate: 300 mm/min
- Tensile direction: MD direction

### (3) Peak intensity ratios P2/P1, P3/P1, and P4/P3

The peak intensity ratios P2/P1, P3/P1, and P4/P3 were calculated as follows.

First, the total reflection infrared absorption spectrum of the seal surface of the sealant layer was measured using a total reflection infrared absorption spectrometer (trade name "Spectrum Spotlight 400/Frontier", manufactured by PerkinElmer) under the following measurement conditions.

### (Measurement conditions)

- Prism material: Diamond
- Measurement wavenumber range: 400 to 4000 cm⁻¹
- Number of integrations: 16

In the measured total reflection infrared absorption spectrum, the line connecting the minima at 1130 ± 5 cm⁻¹ and 680 ± 5 cm⁻¹ was determined as the baseline.

Furthermore, in the total reflection infrared absorption spectrum, the difference between the intensity at the maximum of an absorption peak and the intensity at the baseline was defined as the peak intensity of the absorption peak, and the peak intensities P1 to P4 were calculated.

Finally, the peak intensity ratios P2/P1, P3/P1, and P4/P3 were calculated based on the calculated peak intensities P1 to P4. The results are shown in Table 1.

### <Seal-surface fusion resistance>

Specimens 1 and 2 were prepared from each of the laminates prepared in the examples and comparative examples under two different sets of heating conditions as described below, and these specimens 1 and 2 were used to grade and evaluate the seal-surface fusion resistance in the following manner.

### (1) Specimen 1 (heating conditions: 125°C, 30 min)

First, two laminate pieces each measuring 120 mm in the MD and TD directions were cut out from each of the laminates produced in the examples and comparative examples.

Next, the two cut-out laminate pieces were stacked with their seal surfaces facing each other, and with the seal surfaces in close contact, the four sides of the laminate pieces were heat-sealed using an impulse sealer to produce a fused body.

The fused body was heated by spraying hot water at 125°C for 30 minutes while applying pressure in an environment of 0.21 MPa, and then cooled by spraying water at 40°C for 10 minutes in an environment of 0.21 MPa. After cooling, the fused body was allowed to stand at room temperature for one day. After standing, the heat-sealed portions on the four sides of the fused body were cut off, and the remaining central portion of the fused body was prepared as specimen 1.

### (2) Specimen 2 (heating conditions: 130°C, 30 min)

Specimen 2 was prepared under the same set of heating conditions as the set of heating conditions 1, except that the fused body was heated by spraying hot water at 130°C for 30 minutes.

### (3) Grading and evaluation of seal-surface fusion resistance

For each of the specimens 1 and 2 prepared as described above, the two laminate pieces were pinched by hand and pulled apart, and each specimen was graded according to the following five-point grading scale based on the resistance felt upon separation. The grading results are shown in Table 2.

### (Grading scale)

1: No resistance was felt upon separation
2: Almost no resistance was felt upon separation
3: Slight resistance was felt upon separation
4: Strong resistance was felt upon separation
5: Specimen was fused and considerable resistance was felt (the specimen deformed or the appearance of the seal surface changed (e.g., cohesive failure) upon separation)

The specimens graded "1" or "2" were evaluated as "excellent", the specimens graded "3" were evaluated as "good", the specimens graded "4" were evaluated as "fair", and the specimens graded "5" were evaluated as "poor". The results are shown in Table 2.

### <Low-temperature heat sealability>

The low-temperature heat sealability was evaluated based on the sealing initiation temperature of each of the sealant layers used in the examples and comparative examples. The sealing initiation temperature of the sealant layer was measured as follows.

First, as shown in Fig. 3, two sealant layers measuring 120 mm (TD direction) × 60 mm (MD direction) were prepared, and these two sealant layers were heated at T°C under a pressure of 0.2 MPa for 1 second with a seal width of 10 mm, thereby obtaining a heat sealing sample. The heating temperature T was increased from 130°C to 170°C, inclusive, in increments of 2°C, and a heat sealing sample was prepared at each temperature.

Then, a specimen measuring 60 mm (TD direction) × 15 mm (MD direction) was prepared from each heat sealing sample.

A T-peel test was carried out on each of the specimens thus prepared. The T-peel test was carried out according to JIS K 6854-3. Specifically, in the T-peel test, T-peel was performed in the MD direction with an initial grip separation of 15 mm and a tensile rate of 300 mm/min. The lowest temperature at which the peel strength was 10 N/15 mm or more was determined as the sealing initiation temperature of the sealant layer.

The low-temperature heat sealability of the sealant layer was evaluated based on the following evaluation criteria. The results are shown in Table 2.

### (Evaluation criteria)

Good: Sealing initiation temperature was lower than 155°C
Poor: Sealing initiation temperature was 155°C or higher

**[Table 1]**

| | Physical properties of sealant layer | | | | | | | | | |
|---|---|---|---|---|---|---|---|---|---|---|
| | Thickness | Seal-surface softening temperature | | Seal-surface fusion strength | | | | Peak strength ratio | | |
| | | Surface softening temp. B (before pressure & heat treatment) | Surface softening temp. A (after pressure & heat treatment) | T1 (121°C) | T2. (128°C) | T2 - T1 | T3 (135°C) | P2/P1 | P3/P1 | P4/P3 |
| | µm | °C | °C | N/15 mm | N/15 mm | N/15 mm | N/15 mm | | | |
| Ex. 1 | 60 | 118.2 | 146.3 | 1.5 | 6.5 | 5.0 | 14.4 | - | 0.17 | 1.69 |
| Ex. 2 | 80 | 119.0 | 146.5 | 1.4 | 6.6 | 5.2 | 18.2 | - | 0.18 | 1.58 |
| Ex. 3 | 80 | 118.9 | 146.8 | 1.2 | 5.3 | 4.1 | 18.3 | - | 0.19 | 1.58 |
| Ex. 4 | 90 | 120.2 | 146.9 | 1.4 | 4.8 | 3.5 | 20.0 | - | 0.19 | 1.60 |
| Ex. 5 | 60 | 132.8 | 147.2 | 0.1 | 1.0 | 0.9 | 21.8 | - | 0.24 | 1.20 |
| Ex. 6 | 80 | 133.1 | 147.1 | 0.1 | 1.7 | 1.6 | 27.2 | - | 0.26 | 1.12 |
| Ex. 7 | 60 | 121.5 | 146.7 | 0.4 | 0.4 | 0.04 | 8.8 | - | 0.08 | 0.68 |
| Ex. 8 | 60 | 113.6 | 146.7 | 0.1 | 0.2 | 0.1 | 6.8 | 0.10 | - | - |
| Ex. 9 | 80 | 114.3 | 147.4 | 0.1 | 0.8 | 0.7 | 1.5 | 0.11 | - | - |
| Comp. Ex. 1 | 60 | 142.4 | 153.5 | 0.1 | 0.1 | 0.0 | 0.2 | - | 0.42 | 1.27 |
| Comp. Ex. 2 | 60 | 122.0 | 137.9 | 3.4 | 15.9 | 12.4 | 15.7 | - | 0.12 | 0.67 |
| Comp. Ex. 3 | 60 | 115.1 | 122.3 | 5.0 | 16.8 | 11.8 | 21.0 | - | 0.14 | 1.61 |

**[Table 2]**

| | Low-temp. heat sealability | | Seal-surface fusion resistance | | | |
|---|---|---|---|---|---|---|
| | Seal initiation temp. | | Specimen 1 (125°C, 30 min) | | Specimen 2 (130°C, 30 min) | |
| | Evaluation | °C | Evaluation | Grade | Evaluation | Grade |
| Ex. 1 | Good | 140 | Good | 3 | Fair | 4 |
| Ex. 2 | Good | 142 | Good | 3 | Fair | 4 |
| Ex. 3 | Good | 142 | Good | 3 | Fair | 4 |
| Ex. 4 | Good | 144 | Good | 3 | Fair | 4 |
| Ex. 5 | Good | 142 | Excellent | 1 | Good | 3 |
| Ex. 6 | Good | 142 | Excellent | 1 | Good | 3 |
| Ex. 7 | Good | 144 | Excellent | 2 | Excellent | 2 |
| Ex. 8 | Good | 142 | Excellent | 1 | Excellent | 2 |
| Ex. 9 | Good | 148 | Excellent | 1 | Excellent | |
| Comp. Ex. 1 | Poor | 156 | Excellent | 2 | Excellent | 1 |
| Comp. Ex. 2 | Good | 136 | Poor | 5 | Poor | 5 |
| Comp. Ex. 3 | Good | 138 | Poor | 5 | Poor | 5 |

The results shown in Table 2 indicate that, in Examples 1 to 9, the sealing initiation temperature was less than 155°C, and the seal-surface fusion resistance was graded 1 to 4 under each of the sets of heating conditions of "125°C, 30 min" and "130°C, 30 min". This confirmed that the laminates have low-temperature heat sealability while preventing fusion between the seal surfaces. In contrast, in Comparative Example 1, the sealing initiation temperature was 156°C, which is not less than 155°C. In addition, in Comparative Examples 2 and 3, the seal-surface fusion resistance was graded 5 under each of the sets of heating conditions of "125°C, 30 min" and "130°C, 30 min", indicating that the seal surfaces fused.

From the above, it was confirmed that the laminate of the present disclosure had low-temperature heat sealability and also good seal-surface fusion resistance even when subjected to moist heat treatment.

The following sets forth an outline of the present disclosure.
[1] A laminate including at least a substrate layer and a sealant layer, in which
   a seal surface of the sealant layer after the laminate is subjected to a moist heat treatment has a surface softening temperature of 140°C or higher and 150°C or lower, as measured by local thermal analysis, and
   the substrate layer and the sealant layer contain a polypropylene-based resin.
[2] The laminate according to [1], in which the seal surface of the sealant layer has a surface softening temperature of 110°C or higher and 140°C or lower, as measured by local thermal analysis, and the sealant layer has a fusion strength of 2.0 N/15 mm or lower when heat-sealed to an identical sealant layer under conditions of 121°C, 0.05 MPa, and 30 seconds.
[3] The laminate according to [1], in which the moist heat treatment is a pressure and heat treatment performed on the laminate under conditions of 0.33 MPa, 130°C, and 30 minutes.
[4] A laminate including at least a substrate layer and a sealant layer, in which
   a seal surface of the sealant layer has a surface softening temperature of 110°C or higher and 140°C or lower, as measured by local thermal analysis,
   the sealant layer has a fusion strength of 2.0 N/15 mm or less when heat-sealed to an identical sealant layer under conditions of 121°C, 0.05 MPa, and 30 seconds, and
   the substrate layer and the sealant layer contain a polypropylene-based resin.
[5] The laminate according to any one of [1] to [4], wherein, when the sealant layer is heat-sealed to an identical sealant layer under conditions of 0.05 MPa and 30 seconds, and the fusion strength when the heat sealing temperature is 121°C is denoted by T1 (N/15 mm), and the fusion strength when the heat sealing temperature is 128°C is denoted by T2 (N/15 mm), T2 - T1 is 10.0 N/15 mm or less.
[6] The laminate according to any one of [1] to [5], in which, in a total reflection infrared absorption spectrum of the seal surface, assuming that the absorption peak in a first region of 963 cm⁻¹ or more and 983 cm⁻¹ or less has a peak intensity of P1, a single absorption peak in a second region of 700 cm⁻¹ or more and 750 cm⁻¹ or less has a peak intensity of P2, and, when there are two or more absorption peaks in the second region, of the two absorption peaks with the greatest peak intensities in the second region, the one on the higher-wavenumber side has a peak intensity of P3 and the one on the lower-wavenumber side has a peak intensity of P4, a peak intensity ratio P2/P1 or P3/P1 is 0.15 or less, or P4/P3 is 1.5 or less.
[7] The laminate according to any one of [1] to [6], in which the sealant layer has a fusion strength of 10.0 N/15 mm or less when heat-sealed to an identical sealant layer under conditions of 135°C, 0.05 MPa, and 30 seconds.
[8] The laminate according to any one of [1] to [7], in which the sealant layer has a thickness of 20 µm or more and 100 µm or less.
[9] The laminate according to any one of [1] to [8], further including a gas barrier layer.
[10] A packaging bag obtained using the laminate according to any one of [1] to [9], in which the seal surfaces are heat-sealed with each other.
[11] The packaging bag according to [10] used for an application requiring heat treatment at 80°C or higher.
[12] A sealant film containing a polypropylene-based resin, in which, when a surface of the sealant film serves as a seal surface, the seal surface has a surface softening temperature of 110°C or higher and 140°C or lower, as measured by local thermal analysis, and the sealant film has a fusion strength of 2.0 N/15 mm or lower when heat-sealed to an identical sealant film under conditions of 121°C, 0.05 MPa, and 30 seconds.
[13] A packaging body including a packaging bag and contents contained in the packaging bag, in which the packaging bag is formed using the laminate according to any one of [1] to [9], and the seal surface forms an inner surface of the packaging bag.
[14] A moist heat-treated packaging body obtained by subjecting the packaging body according to [13] to moist heat treatment.

### [Reference Signs List]

- 10: Substrate layer
- 20: Intermediate layer
- 30: Sealant layer
- 30a: Seal surface
- 100, 800: Laminate
- 400: Packaging bag
- 500: Packaging body
- 600: Heat sealing sample
- 610: Heat-sealed portion
- 700: Moist heat-treated packaging body
- 830: Sealant layer
- 830a: Seal surface
- 800: Laminate
- 900: Packaging bag
- C: Contents

## Claims

1. A laminate comprising at least a substrate layer and a sealant layer, wherein
a seal surface of the sealant layer after the laminate is subjected to moist heat treatment has a surface softening temperature of 140°C or higher and 150°C or lower, as measured by local thermal analysis, and
the substrate layer and the sealant layer contain a polypropylene-based resin.

2. The laminate according to claim 1, wherein the seal surface of the sealant layer has a surface softening temperature of 110°C or higher and 140°C or lower, as measured by local thermal analysis, and
the sealant layer has a fusion strength of 2.0 N/15 mm or lower when heat-sealed to an identical sealant layer under conditions of 121°C, 0.05 MPa, and 30 seconds.

3. The laminate according to claim 1, wherein the moist heat treatment is a pressure and heat treatment performed on the laminate under conditions of 0.33 MPa, 130°C, and 30 minutes.

4. The laminate according to claim 1 or 2, wherein, when
the sealant layer is heat-sealed to an identical sealant layer under conditions of 0.05 MPa and 30 seconds, and
the fusion strength when the heat sealing temperature is 121°C is denoted by T1 (N/15 mm), and
the fusion strength when the heat sealing temperature is 128°C is denoted by T2 (N/15 mm), T2 - T1 is 10.0 N/15 mm or less.

5. The laminate according to claim 1 or 2, wherein, in a total reflection infrared absorption spectrum of the seal surface, assuming that the absorption peak in a first region of 963 cm⁻¹ or more and 983 cm⁻¹ or less has a peak intensity of P1, a single absorption peak in a second region of 700 cm⁻¹ or more and 750 cm⁻¹ or less has a peak intensity of P2, and, when there are two or more absorption peaks in the second region, of the two absorption peaks with the greatest peak intensities in the second region, the one on the higher-wavenumber side has a peak intensity of P3 and the one on the lower-wavenumber side has a peak intensity of P4, a peak intensity ratio P2/P1 or P3/P1 is 0.15 or less, or P4/P3 is 1.5 or less.

6. The laminate according to claim 1 or 2, wherein the sealant layer has a fusion strength of 10.0 N/15 mm or less when heat-sealed to an identical sealant layer under conditions of 135°C, 0.05 MPa, and 30 seconds.

7. The laminate according to claim 1 or 2, wherein the sealant layer has a thickness of 20 µm or more and 100 µm or less.

8. The laminate according to claim 1 or 2, further comprising a gas barrier layer.

9. A packaging bag obtained using the laminate according to claim 1 or 2, wherein the seal surfaces are heat-sealed with each other.

10. The packaging bag according to claim 9, used for an application requiring heat treatment at 80°C or higher.

11. A sealant film containing a polypropylene-based resin, wherein
a seal surface of the sealant film has a surface softening temperature of 110°C or higher and 140°C or lower, as measured by local thermal analysis, and
the sealant film has a fusion strength of 2.0 N/15 mm or lower when heat-sealed to an identical sealant film under conditions of 121°C, 0.05 MPa, and 30 seconds.

12. A packaging body comprising a packaging bag and contents contained in the packaging bag, wherein
the packaging bag is formed using the laminate according to claim 1 or 2, and
the seal surface forms an inner surface of the packaging bag.

13. A moist heat-treated packaging body obtained by subjecting the packaging body according to claim 12 to moist heat treatment.
